# FASCICULE DE BREVET EUROPEEN

(11) **EP 1 800 897 B1**
(45) Date de publication et mention de la délivrance du brevet: **18.05.2011**
(21) Numéro de dépôt: 06026191.4
(22) Date de dépôt: 18.12.2006
(51) Int. Cl.: B60B 1/04, B60B 1/00

(54) **Roue comprenant une jante, un moyeu, et un dispositif de raccordement de la jante au moyeu**
Rad umfassend eine Felge, eine Nabe und eine Einrichtung zum Verbinden von Felge und Nabe
Wheel comprising a rim, a hub and a device for connecting rim and hub

(30) Priorité: 21.12.2005 FR 0513086; 03.04.2006 FR 0602877
(43) Date de publication de la demande: 27.06.2007
(73) Titulaire: SALOMON S.A.S., 74370 Metz-Tessy (FR)
(72) Inventeur: Mercat, Jean-Pierre, 74650 Chavanod (FR); Renard, Philippe, 73100 Moucy (FR)

(56) Documents cités:
- EP-A- 1 304 238
- WO-A2-03/020535
- DE-U1- 9 416 688
- FR-A1- 2 762 267
- FR-A1- 2 784 622
- FR-A1- 2 792 251
- US-A- 6 036 281

## Description

L'invention se rapporte au domaine des roues comprenant une jante, un moyeu, et au moins un dispositif de raccordement de la jante au moyeu, dans le cas où le dispositif de raccordement comprend au moins un rayon composite et un moyen de liaison du rayon à la jante ou au moyeu. L'invention concerne également le dispositif de raccordement.

De tels roues et dispositifs de raccordement sont destinés aux bicyclettes, et aussi à d'autres véhicules comme les fauteuils à roues, ou autre.

Le dispositif de raccordement de la jante au moyeu d'une roue à rayons comprend, par définition, au moins un rayon. Ce dernier présente un corps allongé qui s'étend entre une première et une deuxième extrémités.

Traditionnellement le rayon est réalisé avec du métal, car ce matériau facilite la mise en forme des extrémités. Par exemple il peut être prévu qu'une extrémité soit conformée pour permettre un accrochage, ou bien filetée pour coopérer avec un écrou. L'avantage est que la fabrication du rayon est simple et peu onéreuse.

Cependant un rayon métallique présente quelques inconvénients, comme celui d'un poids plutôt élevé. Cela tend à alourdir la roue. Un autre inconvénient du rayon métallique est sa relative faiblesse en résistance à la traction ou à la fatigue. Il est en conséquence nécessaire de surveiller le niveau de tension de chaque rayon.

Afin de pallier ces inconvénients l'art antérieur a proposé de réaliser un rayon qui comprend un matériau composite, comme par exemple des fibres de carbone liées par de la résine.

Ainsi le document FR 2 762 267, qui forme l'état de la technique le plus proche selon le préambule de la revendication 1, enseigne la fabrication d'un rayon dont le corps en matériau composite comprend deux portions allongées et droites, réunies par deux portions arrondies. Le rayon présente ainsi la forme générale d'un anneau oblong. Un avantage lié à cette structure est celle d'un poids réduit. Cela allège la roue. Un autre avantage est une très grande résistance à la traction ou à la fatigue. Ainsi la maintenance de la roue est réduite.

L'emploi des rayons selon le document FR 2 762 267 présente cependant des inconvénients. Par exemple le moyen de liaison d'un rayon à la jante, ou au moyeu, est lourd et complexe. En effet, ce moyen comprend une tige qui passe dans la portion arrondie du rayon, ainsi qu'une chape qui accueille la tige. L'association d'une tige et d'une chape forme une articulation encombrante et lourde. De plus sa mise en oeuvre est complexe car il faut prévoir une solidarisation de la chape à la jante ou au moyeu. Ainsi l'avantage du gain de poids sur le corps du rayon est perdu en partie au moins au niveau de la liaison.

Il a donc été proposé de modifier la structure d'un rayon composite.

Par exemple le document FR 2 792 251 propose un rayon fait à partir d'un matériau composite. Le corps de ce rayon comprend une seule portion allongée qui s'étend entre une première et une deuxième extrémités. Chaque extrémité présente la forme d'une boucle, au sein de laquelle est logé un noyau de renflement. Pour relier une extrémité à une jante ou à un moyeu, il est prévu un embout creux qui accueille la boucle, ainsi qu'une vis creuse qui elle-même accueille l'embout.

Le rayon selon le document FR 2792 251 présente l'avantage d'être plus léger, de par la structure de son corps. Cependant les moyens de liaison qui lui sont associés restent quant à eux relativement encombrants et lourds, car ils enveloppent les boucles. De plus leur fabrication et leur mise en oeuvre sont relativement complexes.

De manière plus générale on peut dire que le gain de poids, obtenu avec un rayon qui comprend un matériau composite, est perdu en partie au moins par la liaison du rayon à la jante et/ou au moyeu de la roue. De plus cette liaison est relativement complexe.

Par rapport à cela l'invention a notamment pour but d'optimiser les moyens de liaison, et notamment d'alléger le ou les moyens de liaison d'un rayon à la jante ou au moyeu d'une roue.

L'invention cherche aussi à simplifier le ou les moyens de liaison.

Un autre but est d'alléger une roue qui comprend au moins un rayon fabriqué à l'aide d'un matériau composite.

Pour ce faire, l'invention propose une roue comprenant une jante, un moyeu, et au moins un dispositif de raccordement de la jante au moyeu, le dispositif de raccordement comprenant un rayon composite et un premier moyen de liaison du rayon à la jante ou au moyeu, le rayon comprenant un corps allongé qui s'étend selon une direction longitudinale entre une première et une deuxième extrémités, le corps et les extrémités comprenant des fibres, les fibres étant disposées pour former une première boucle à la première extrémité.

La roue selon l'invention est caractérisée par le fait que le premier moyen de liaison comprend un premier insert logé dans la première boucle, une première tige solidarisée au premier insert, la première tige étant orientée selon la direction longitudinale, une première portion de vissage ou d'accrochage étant définie sur la première tige.

Ainsi la liaison du corps du rayon, à la jante ou au moyeu, se fait à l'aide de l'insert et de la tige. Etant donné que l'insert est logé dans la boucle, la transmission des efforts de traction du rayon passe par l'intérieur de la boucle. Pour réaliser cette transmission d'efforts, il est fait appel à des éléments dont le volume est réduit. En effet, l'insert est à l'intérieur de la boucle. Par conséquent le poids du moyen de liaison du rayon, à la jante ou au moyeu, est réduit par rapport à un moyen selon l'art antérieur.

Un avantage qui en découle est que l'inertie du moyen de liaison est réduite. De plus la structure du moyen de liaison est simple, ce qui le rend facile à fabriquer et à assembler. Un autre avantage est que les fibres sont sollicitées en traction, selon la direction longitudinale. Cela permet au rayon de présenter une plus grande résistance. Un avantage complémentaire est lié à l'allègement de la roue : avec une inertie réduite, celle-ci offre un meilleur comportement dynamique. Par exemple dans le cas d'une utilisation sur une bicyclette, une accélération est plus facile.

D'autres caractéristiques et avantages de l'invention seront mieux compris à l'aide de la description qui va suivre, en regard du dessin annexé illustrant, par des formes de réalisation non limitatives, comment l'invention peut être réalisée, et dans lequel :
- la figure 1 est une vue de face d'un dispositif de raccordement, selon une première forme de réalisation de l'invention,
- la figure 2 est une vue de côté du dispositif de la figure 1,
- la figure 3 est une coupe selon III-III de la figure 1,
- la figure 4 est une vue en perspective d'éléments constitutifs du dispositif de la figure 1,
- la figure 5 est un schéma relatif à la fabrication du dispositif de la figure 1,
- la figure 6 est une vue stylisée partielle de la figure 1, pour expliquer le cheminement des fibres au sein d'un rayon du dispositif,
- la figure 7 est une vue longitudinale d'un moyeu de roue,
- la figure 8 est une coupe schématique partielle d'une roue, pour expliquer les liaisons d'un rayon au moyeu et à la jante,
- la figure 9 est une vue de face partielle d'un dispositif, selon une deuxième forme de réalisation de l'invention,
- la figure 10 est une vue de face partielle d'un dispositif, selon une troisième forme de réalisation de l'invention,
- la figure 11 est une vue de côté partielle d'un dispositif, selon une quatrième forme de réalisation de l'invention,
- la figure 12 est une vue d'un insert et d'une tige pour une liaison d'un rayon composite, selon une cinquième forme de réalisation de l'invention,
- la figure 13 est une vue similaire à la figure 3, selon une sixième forme de réalisation de l'invention,
- la figure 14 est une vue en perspective d'éléments constitutifs d'un dispositif, selon une septième forme de réalisation de l'invention,
- la figure 15 est une coupe selon XV-XV de la figure 14,
- la figure 16 est une coupe selon XVI-XVI de la figure 14.

Bien que les formes de réalisation concernent une roue adaptée à une bicyclette, il doit être compris qu'elles ont trait également à des roues adaptées à d'autres véhicules. Comme évoqué avant.

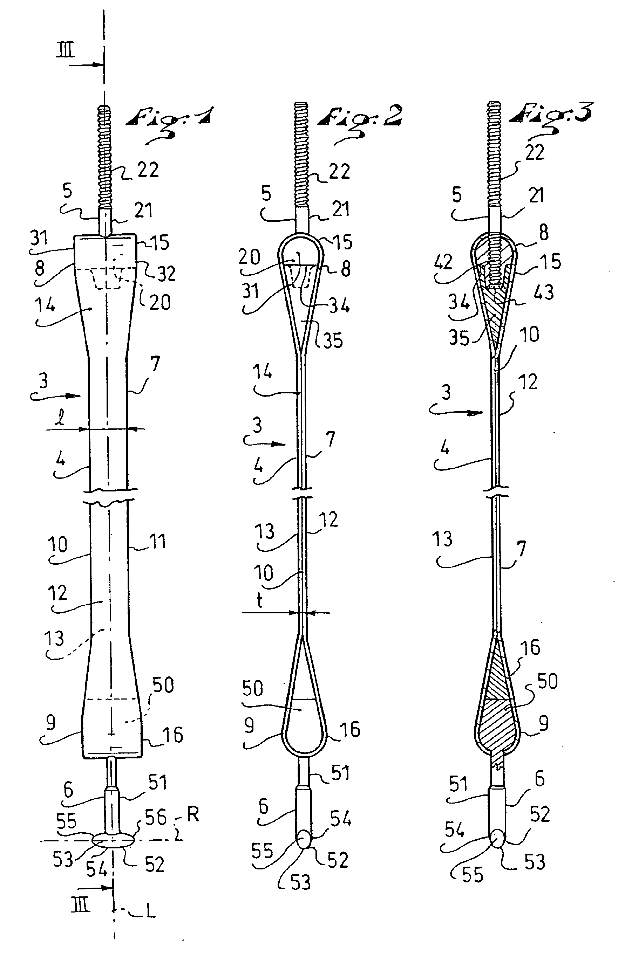

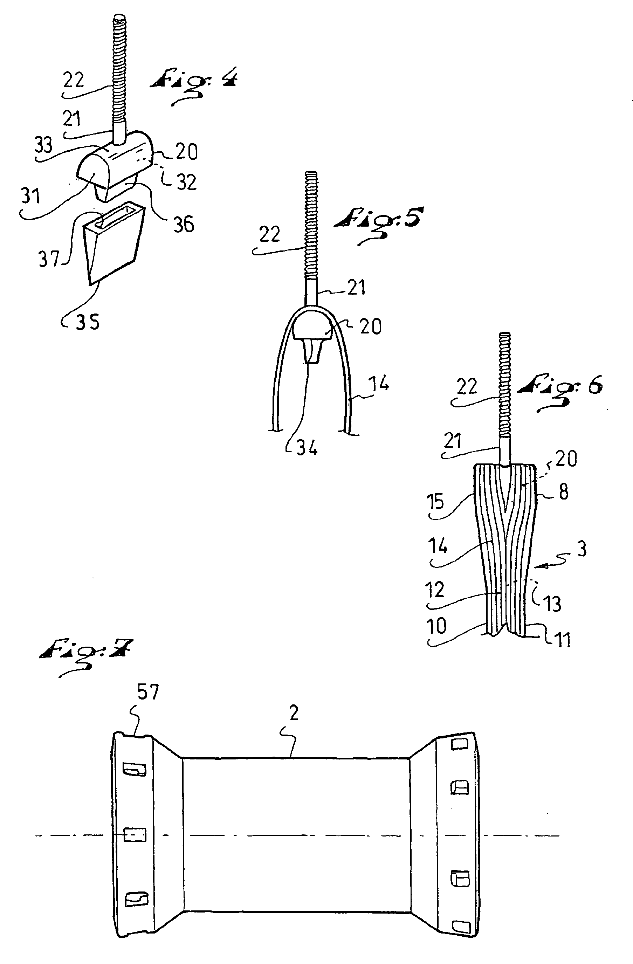

La première forme de réalisation est présentée à l'aide des figures 1 à 8.

Comme on le comprend à l'aide des figures 1, 2, 3 et 8, une roue non représentée comprend une jante 1, un moyeu 2, et au moins un dispositif de raccordement 3 de la jante 1 au moyeu 2.

Le dispositif de raccordement 3 comprend un rayon composite 4, un premier moyen de liaison 5 du rayon 4 à la jante 1, ainsi qu'un deuxième moyen de liaison 6 du rayon 4 au moyeu 2.

Le rayon composite 4 comprend lui-même un corps allongé 7 qui s'étend selon une direction longitudinale L entre une première extrémité 8 et une deuxième extrémité 9. Le corps allongé 7 s'étend en largeur entre un premier bord 10 et un deuxième bord 11, et en épaisseur entre une première face 12 et une deuxième face 13.

Le corps allongé 7 et les extrémités 8, 9 comprennent des fibres 14.

Selon la première forme de réalisation décrite, les fibres 14 sont disposées pour former une première boucle 15 à la première extrémité 8, ainsi qu'une deuxième boucle 16 à la deuxième extrémité 9. Ainsi la première extrémité 8 comprend la première boucle 15, et la deuxième extrémité 9 comprend la deuxième boucle 16. Bien entendu il pourrait alternativement être prévu une seule boucle, soit au niveau de la première extrémité 8, soit au niveau de la deuxième 9.

Le corps allongé 7 et les extrémités 8, 9 forment une pièce monobloc. Celle-ci peut être réalisée par tout procédé connu, selon un certain nombre d'étapes. Par exemple il peut être prévu de bobiner une mèche multifilamentaire de fibres de carbone sèches, puis, de guider la mèche dans un bac pour être imprégnée d'une matière qui permet la cohésion des fibres. Il peut s'agir d'une résine thermodurcissable ou d'un autre matériau, comme une matière synthétique thermoformable. Ensuite la mèche imprégnée est bobinée en courroie. De préférence il est prévu de réaliser plusieurs tours de bobinage. Cela évite, ou réduit fortement, une discontinuité d'épaisseur du rayon 4. Il est d'ailleurs possible d'ajouter à la courroie des renforts localisés, pour ajuster l'épaisseur.

Bien entendu, les fibres 14 sont orientées sensiblement selon la direction longitudinale L.

La courroie est alors placée dans un moule, pour être mise en forme et subir une élévation de température. A la sortie du moule le corps allongé 7 et les boucles 15, 16 forment une pièce monobloc, dont la forme est stable. Cela signifie que la pièce ne se déforme pas sans sollicitation extérieure.

Bien entendu le procédé de fabrication du dispositif de raccordement 3 peut comprendre d'autres étapes, comme on le verra par la suite.

Le corps allongé 7 présente l'aspect général d'une barre, de section sensiblement rectangulaire, dont la largeur 1 et l'épaisseur t sont sensiblement constantes. Cependant il peut alternativement être prévu que la largeur varie, ou que l'épaisseur varie, par exemple pour conférer au rayon 4 des propriétés aérodynamiques. Ainsi la section du corps allongé 7 peut présenter toute forme comme celle d'un carré, d'un rectangle, d'un oblong, d'une ellipse, ou autre.

Selon l'invention, comme on le comprend à l'aide des figures 1 à 8, le premier moyen de liaison 5 comprend un premier insert 20 logé dans la première boucle 15, une première tige 21 solidarisée au premier insert 20, la première tige 21 étant orientée selon la direction longitudinale L, une première portion de vissage 22 étant définie sur la première tige. En l'occurrence, la portion de vissage 22 est réalisée sous la forme d'un filetage.

Comme on le verra mieux par la suite la portion de vissage 22 est centrée dans l'insert 20, transversalement et dans le sens de l'épaisseur, afin de lui éviter toute flexion dommageable à sa résistance en traction.

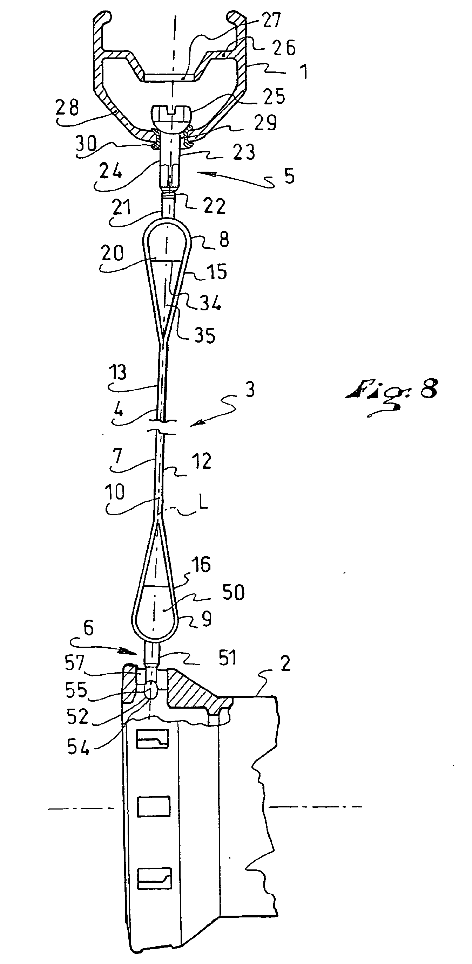

La première portion de vissage 22, ou vis, permet une transmission directe des efforts entre le rayon 4 et la jante 1. En effet, la vis 22 est vissée dans un écrou 23 lui-même retenu à la jante 1, comme on le voit sur la figure 8. La retenue de l'écrou 23 dans la jante est permise par la géométrie des pièces. L'écrou 23 comprend un corps 24 et une tête élargie 25. La jante 1 quant à elle comprend un premier pont 26, percé d'un orifice 27 pour le passage de l'écrou, ainsi qu'un deuxième pont 28, percé d'un orifice 29 pour le passage du corps 24 de l'écrou. Accessoirement, une bague ou oeillet 30 est placé dans l'orifice 29 du deuxième pont 28, pour consolider l'assise de la tête 25 sur le pont 28. Cela est notamment utile lorsque la jante comprend un alliage d'aluminium. L'oeillet 30 quant à lui est en acier, ou tout autre matériau convenable.

Au niveau du premier moyen de liaison 5 la transmission des efforts est directe, entre le rayon 4 et la jante 1, de par la simplicité de la liaison vis-écrou. En fait la vis 22 est unique, parce que la première tige 21 est unique. Le corollaire est que l'écrou 23 est également unique. Ainsi le premier moyen de liaison 5 comprend une seule et unique liaison vis-écrou. Cette liaison présente notamment l'avantage de faciliter le réglage de tension du dispositif de raccordement 3, et donc du rayon 4. Aucune flexion n'est exercée dans le rayon.

La première tige 21 est également, bien entendu, solidarisée à l'insert 20. Ce dernier 20 s'étend transversalement entre une première face latérale 31 et une deuxième face latérale 32. Ces faces 31, 32 sont par exemple sensiblement planes, et orientées selon la direction longitudinale L. Entre les faces latérales 31, 32, l'insert 20 présente une face de liaison 33. Cette dernière 33 est incurvée. Elle 33 vient en contact des fibres 14 du rayon 4, pour donner à la première extrémité 8 sa forme de boucle 15, dans le cas où l'insert 20 et la courroie sont placés simultanément dans le moule. A l'opposé de la face de liaison 33, l'insert 20 présente par exemple une extrémité 34. L'idée est ici de réduire autant que possible le volume de l'insert 20, pour réduire sa masse. Cela allège le dispositif de raccordement 3.

Selon la première forme de réalisation, un bouchon 35 est logé dans la première boucle 15, entre l'insert 20 et le corps 7. Le bouchon 35 vient au contact de l'extrémité 34 de l'insert. L'extrémité 34 présente une saillie 36 prévue pour s'emboîter dans une cavité 37 du bouchon 35. Ainsi la retenue de ce dernier sur l'insert 20 est mieux maîtrisée. Le bouchon 35 complète le remplissage de la boucle 15. Il 35 comprend un matériau de faible densité, comme une matière synthétique, de la mousse ou une pièce creuse, pour alléger encore le premier moyen de liaison 5. Bien entendu, l'utilisation du bouchon est facultative.

L'insert 20 et le bouchon 35 constituent un assemblage en forme de goutte, l'assemblage épousant l'intérieur de la boucle 15 de la première extrémité 8.

Selon la première forme de réalisation décrite, la première tige 21 est solidarisée au premier insert 20 par vissage. Pour cela, la première tige 21 présente une deuxième portion de vissage 42 à l'opposé de la première 22. Cette deuxième portion 42 se visse dans un orifice fileté 43 de l'insert. Bien entendu, l'orifice 43 est orienté selon la direction longitudinale L. Ainsi, lorsqu'elle est vissée dans l'insert 20, la tige 21 est naturellement orientée dans le sens de la longueur du corps 7 du rayon 4. Avec ses deux portions filetées 22, 42, la première tige 21 forme un goujon.

Afin d'équilibrer la répartition des efforts longitudinaux qui transitent par le dispositif de raccordement 3, la première tige 21 est sensiblement alignée avec un axe longitudinal central du rayon 4. Cet axe est repéré sur les figures par la référence L. C'est pourquoi la tige 21 est sensiblement à mi-chemin entre les faces latérales 31, 32 de l'insert 20. En d'autres termes l'orifice fileté 43 est lui aussi sensiblement à mi-chemin entre les faces latérales 31, 32. L'insert est symétrique transversalement par rapport à l'axe de l'orifice fileté 43. L'insert 20 est aussi symétrique dans le sens de l'épaisseur.

Toujours dans l'esprit d'un équilibre des efforts, la première tige 21 traverse la première boucle 15 sensiblement en son milieu, c'est-à-dire à mi-chemin entre les premier 10 et deuxième 11 bords du rayon 4.

Selon la première forme de réalisation décrite, et ce de manière non limitative, la traversée de la boucle 15 est permise par l'écartement des fibres 14 au moment de la fabrication. En fait une autre étape du procédé de fabrication consiste à écarter les fibres 14 et à faire passer la tige 21 dans la boucle 15 avant la mise en place, dans le moule, d'un ensemble comprenant le rayon 4, le premier insert 20 et la première tige 21. Bien entendu, la tige peut être vissée dans l'insert, soit avant, soit après sa mise en place dans la boucle 15. Le bouchon 35 est de préférence mis dans le moule avec l'ensemble, mais il peut alternativement être ajouté après, c'est-à-dire quand le corps 7 et les boucles 15, 16 ont pris leurs formes définitives. Le bouchon peut aussi être injecté lors du moulage.

Etant donné que pour laisser passer la tige 21 les fibres 14 ont été écartées, la première boucle 15 est plus large que le corps allongé 7. Un avantage lié à cette construction est de préserver la continuité des fibres 14. L'écartement est prévu pour qu'une quantité équivalente de fibres passent de chaque côté de la tige 21. Cela confère à la première extrémité 8 une symétrie transversale, par rapport à un axe longitudinal central. Il en résulte une transmission longitudinale des efforts. Aucun couple ou moment de flexion n'est exercé sur la tige 21, ou sur la boucle 15.

La construction du dispositif 3 est telle que la première tige 21 est centrée, transversalement, aussi bien par rapport à la première boucle 15 que par rapport au corps allongé 7. Ainsi le dispositif de raccordement 3 est symétrique transversalement. Le dispositif 3 est également symétrique dans le sens de l'épaisseur. Le corollaire est que le rayon composite 4 est lui aussi symétrique transversalement et selon l'épaisseur. Ainsi les efforts utiles qui transitent dans le rayon 4 sont transmis intégralement. On n'observe pas de dispersion parasite. Les efforts sont équilibrés.

Selon l'invention le deuxième moyen de liaison 6, quant à lui, comprend un deuxième insert 50 logé dans la deuxième boucle 16, une deuxième tige 51 solidarisée au deuxième insert 50, la deuxième tige 51 étant orientée selon la direction longitudinale L, une deuxième portion d'accrochage 52 étant définie sur la deuxième tige. En l'occurrence, la portion d'accrochage 52 comprend une tête élargie 53 en forme de T. Par exemple la tête 53 comprend un corps allongé 54 qui s'étend longitudinalement, entre une première 55 et une deuxième 56 extrémités, selon un axe R. Ce dernier R est orienté par exemple perpendiculairement à la direction longitudinale du rayon 4, et selon la largeur 1 du rayon 4.

Selon la forme de réalisation décrite, la deuxième portion d'accrochage 52, la deuxième tige 51 et l'insert 50 forment une pièce monobloc. Celle-ci peut par exemple comprendre un métal ou tout matériau convenable.

En ce qui concerne la fabrication et la géométrie, excepté pour la portion d'accrochage et la liaison de la tige 51 à l'insert 50, le deuxième moyen de liaison 6 est similaire, voire identique, au premier 5. On retrouve notamment les symétries qui permettent des transmissions directes des efforts.

La tête 53 est accrochée au moyeu 2 par insertion dans une encoche 57 du moyeu, puis rotation de 90°. La forme et les dimensions de l'encoche 57 correspondent à celles du corps allongé 54. Ce dernier 54 est disposé perpendiculairement à la direction longitudinale de l'encoche 57 lors de la retenue. Bien entendu, l'encoche 57 présente une géométrie qui permet une immobilisation en rotation du dispositif 3, dès lors qu'un effort de traction lui est appliqué. Cette technique est connue de l'homme du métier.

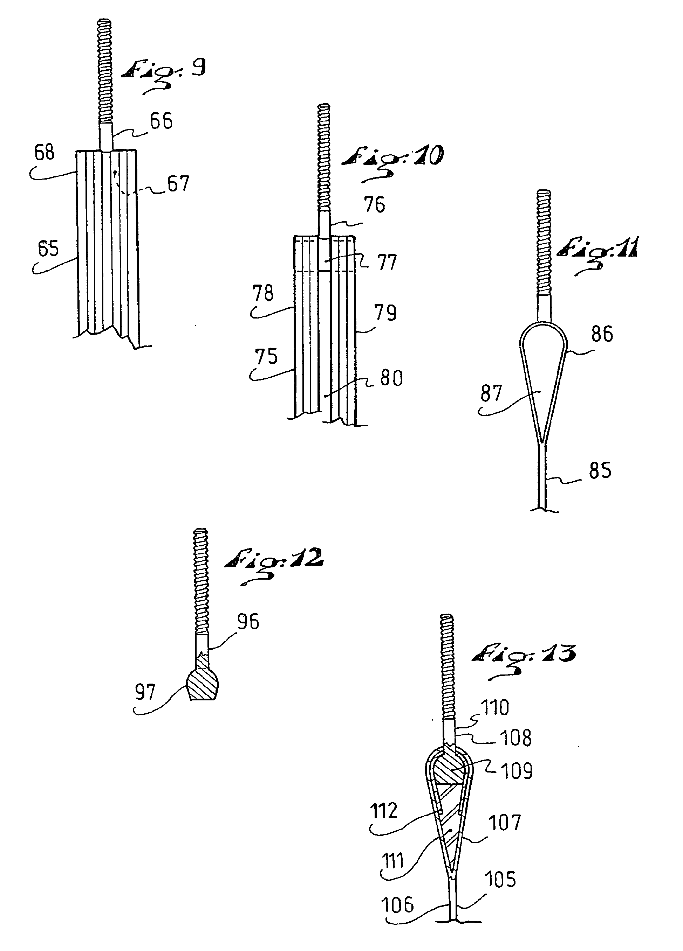

Les autres formes de réalisation sont présentées ci-après à l'aide des figures 9 à 16. Pour des raisons de commodité seules les différences, par rapport à la première forme, sont mises en évidence.

La deuxième forme est visible sur la figure 9. Un dispositif de raccordement comprend un rayon composite 65, ainsi qu'un moyen de liaison muni d'une tige 66. Celle-ci 66 est vissée dans un insert 67 après que le rayon 65 ait été mis en forme à l'aide du moule. Pour ce faire le rayon 65 est percé, par exemple avec un forêt, au niveau d'une boucle 68. Ainsi le rayon 65 peut conserver une largeur constante sur toute sa longueur, c'est-à-dire au niveau du corps et des extrémités. Des renforts locaux peuvent être ajoutés afin de compenser un affaiblissement structurel lié au perçage.

La troisième forme de réalisation de l'invention est visible sur la figure 10. Un dispositif de raccordement comprend un rayon composite 75, ainsi qu'un moyen de liaison muni d'une tige 76 et d'un insert 77. Ici le rayon 75 comprend deux branches distinctes 78, 79, séparées par un interstice 80. Ce dernier présente par exemple une largeur voisine ou égale à celle de la tige 76. Les deux branches 78, 79 ont par exemple la même largeur. L'interstice est dans le prolongement de la tige 76. Ainsi l'équilibrage des efforts est vérifié. Un avantage qui résulte de cette construction est un allègement accru du rayon 75.

La quatrième forme de réalisation est visible sur la figure 11. Un dispositif de raccordement comprend un rayon composite 85 et une première boucle 86. Un insert 87 est logé dans la boucle 86 de façon à la remplir totalement. Aucun bouchon n'est utilisé. Un avantage qui résulte de cette construction est la réduction du nombre d'opérations de fabrication.

La cinquième forme de réalisation est visible sur la figure 12. Un dispositif de raccordement comprend un moyen de liaison, lequel comprend une tige 96 et un insert 97. La tige 96 et l'insert 97 forment une pièce monobloc. Cette structure permet la suppression d'une opération d'assemblage de la tige avec l'insert.

La sixième forme de réalisation est présentée à l'aide de la figure 13. Un dispositif de raccordement comprend un rayon composite 105, avec un corps 106 et une boucle 107. Un moyen de liaison 108 comprend un insert 109, une tige 110, et un bouchon 111. Le moyen de liaison comprend encore une douille 112, laquelle est logée dans la boucle 107, au contact de la boucle 107, et en partie autour de l'insert 109 et/ou du bouchon 111. La douille 112 permet un préassemblage de l'insert 109 avec le bouchon 111. La douille 112 aide à une répartition homogène des contraintes de compression entre l'insert 109 et la boucle 107.

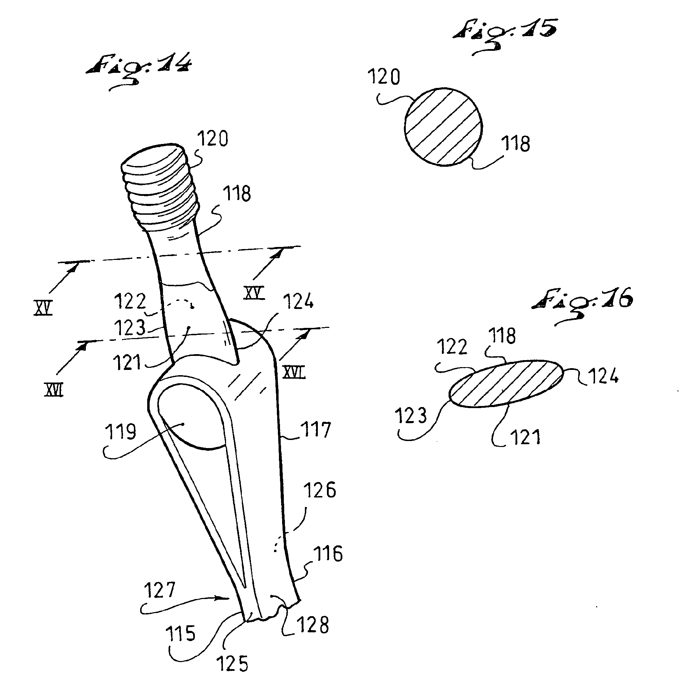

La septième forme de réalisation est présentée à l'aide des figures 14 à 16. Un dispositif de raccordement comprend un rayon composite 115, avec un corps 116 et une boucle 117. Une tige 118 traverse la boucle pour être solidarisée à un insert 119. Selon la septième forme de réalisation de l'invention la tige 118 et l'insert 119 forment une pièce monobloc, comprenant par exemple un métal. Entre une extrémité de vissage 120 et l'insert 119, la tige 118 présente une section variable. Du côté de l'extrémité ou portion de vissage 120 la section est ronde, comme on le voit bien sur la figure 15. Différemment à proximité de l'insert 119 la section de la tige 118 est plus étroite et allongée, comme on le voit sur la figure 16. La section peut présenter une forme elliptique, oblongue, rectangulaire, ou autre. Ainsi vers l'insert 119 la tige 118 présente une première face latérale 121 opposée à une deuxième face latérale 122. Les faces s'étendent entre deux extrémités 123, 124 de la section. Les faces latérales 121, 122 sont parallèles aux bords latéraux 125, 126 du rayon 115. En d'autres termes les faces latérales 121, 122 sont perpendiculaires aux faces 127, 128 du corps 116. De préférence, la tige 118 est centrée entre les bords latéraux 125, 126, toujours dans le souci d'équilibrer la répartition des efforts. L'avantage principal, lié à l'emploi d'une section en partie aplatie de la tige 118, est une réduction dans l'écartement des fibres au niveau de la boucle 117. Ainsi les fibres sont à peine écartées de part et d'autre de la tige. La transmission des efforts dans le rayon 115 est encore plus directe. En conséquence la largeur de la boucle 117 est à peine supérieure à celle du corps 116. Les différentes sections de la tige 118 présentent par exemple la même surface, pour une répartition homogène des contraintes, mais cela n'est pas une obligation.

D'une manière générale, l'invention est réalisée à partir de matériaux et selon des techniques de mise en oeuvre connus de l'homme du métier.

Notamment un dispositif de raccordement peut comprendre une seule ou bien deux boucles. Un moyen de liaison peut comprendre, soit une portion de vissage, soit une portion d'accrochage. En conséquence toute combinaison de ces moyens est possible sur le dispositif de raccordement. C'est pourquoi l'invention n'est pas limitée à une forme comprenant une portion de vissage à une extrémité du rayon, et une portion d'accrochage à l'extrémité opposée.

De plus de multiples variantes structurelles sont possibles. Par exemple un insert peut faire saillie latéralement par rapport à une boucle, ou au contraire être en léger retrait.

Encore une portion de vissage de tige peut être mâle, pour former une vis, ou à l'inverse femelle, pour former un écrou. Dans ce second cas il peut être prévu de disposer une vis dans la jante ou dans le moyeu.

## Revendications

1. Roue comprenant une jante (1), un moyeu (2), et au moins un dispositif de raccordement (3) de la jante (1) au moyeu (2), le dispositif de raccordement (3) comprenant un rayon composite (4, 65, 75, 85, 105, 115) et un premier moyen de liaison (5) du rayon (4, 65, 75, 85,105, 115) à la jante (1) ou au moyeu (2), le rayon comprenant un corps allongé (7, 106, 116) qui s'étend selon une direction longitudinale (L) entre une première (8) et une deuxième (9) extrémités, le corps (7, 106, 116) et les extrémités (8, 9) comprenant des fibres (14), les fibres (14) étant disposées pour former une première boucle (15, 68, 86, 107, 117) à la première extrémité (8), **caractérisée par le fait que** le premier moyen de liaison (5) comprend un premier insert (20, 67, 77, 87, 97, 109, 119) logé dans la première boucle (15, 68, 86, 107, 117), une première tige (21, 66, 76, 96, 110, 118) solidarisée au premier insert, la première tige (21, 66, 76, 96, 110, 118) étant orientée selon la direction longitudinale (L), une première portion de vissage (22, 120) ou d'accrochage (52) étant définie sur la première tige (21, 66, 76, 96,110,118).

2. Roue selon la revendication 1, **caractérisée par le fait que** le premier insert (20, 67, 77, 87, 97, 109, 119) s'étend transversalement entre une première face latérale (31) et une deuxième face latérale (32), l'insert présentant une face de liaison (33) incurvée, entre les faces latérales (31, 32).

3. Roue selon la revendication 1 ou 2, **caractérisée par le fait qu'**un bouchon (35, 111) est logé dans la première boucle (15, 68, 107, 117).

4. Roue selon la revendication 1 ou 2, **caractérisée par le fait que** l'insert (87) est logé dans la boucle (86) de façon à la remplir totalement.

5. Roue selon l'une des revendications 1 à 4, **caractérisée par le fait qu'**une douille (112) est logée dans la boucle (15, 68, 86, 107, 117), au contact de la boucle.

6. Roue selon l'une des revendications 1 à 5, **caractérisée par le fait que** la première tige (21, 66, 76) présente une deuxième portion de vissage (42) à l'opposé de la première (22), la deuxième portion de vissage (42) se vissant dans un orifice fileté (43) de l'insert (20, 67, 77), l'orifice fileté (43) étant orienté selon la direction longitudinale (L).

7. Roue selon l'une des revendications 1 à 5, **caractérisée par le fait que** la première tige (96, 118) et le premier insert (97, 119) forment une pièce monobloc.

8. Roue selon l'une des revendications 1 à 7, **caractérisée par le fait que** la première tige (21, 96, 118) traverse la première boucle (15), les fibres (14) de la première boucle (15, 86, 107,117) ayant été écartées pour laisser passer la tige (21, 96,118).

9. Roue selon l'une des revendications 1 à 7, **caractérisée par le fait que** la première tige (66) est vissée dans le premier insert (67) après que le rayon (65) ait été percé au niveau de la première boucle (68).

10. Roue selon l'une des revendications 1 à 7, **caractérisée par le fait que** le rayon (75) comprend deux branches distinctes (78, 79).

11. Roue selon l'une des revendications 1 à 10, **caractérisée par le fait que** la première tige (118) présente une section variable.

12. Roue selon la revendication 11, **caractérisée par le fait que** du côté de la première portion de vissage (120) la section de la tige (118) est ronde, et **par le fait qu'**à proximité du premier insert (119) la section de la tige (118) est plus étroite et allongée.

13. Roue selon l'une des revendications 1 à 12, **caractérisée par le fait que** la première portion de vissage (22,120) est réalisée sous la forme d'un filetage.

14. Roue selon l'une des revendications 1 à 12, **caractérisée par le fait que** la portion d'accrochage (52) comprend une tête élargie (53).

15. Roue selon l'une des revendications 1 à 14, **caractérisée par le fait que** le dispositif de raccordement (3) comprend un deuxième moyen de liaison (6), lequel comprend un deuxième insert (50) logé dans une deuxième boucle (16), une deuxième tige (51) étant solidarisée au deuxième insert (50), la deuxième tige (51) étant orientée selon la direction longitudinale (L), une deuxième portion de vissage ou d'accrochage (52) étant définie sur la deuxième tige.

16. Roue selon l'une des revendications 1 à 15, **caractérisée par le fait que** la tige (21, 51, 66, 76, 96, 110, 118) est sensiblement alignée avec un axe longitudinal central du rayon (4, 65, 75, 85, 105, 115).

17. Roue selon l'une des revendications 1 à 16, **caractérisée par le fait que** le dispositif de raccordement (3) est symétrique transversalement.

18. Roue selon l'une des revendications 1 à 17, **caractérisée par le fait que** le dispositif de raccordement (3) est symétrique selon l'épaisseur.

19. Roue selon l'une des revendications 2 à 18, **caractérisée par le fait que** la tige (21, 51, 66, 76, 96, 110, 118) est sensiblement à mi-chemin entre les faces latérales (31, 32) de l'insert (20, 50, 67, 77, 87, 97, 109, 119).

20. Dispositif de raccordement (3) pour une roue selon l'une des revendications 1 à 19.

## Claims

1. Wheel comprising a rim (I), a hub (2), and at least one device (3) for connecting the rim (1) to the hub (2), the connecting device (3) comprising a composite spoke (4, 65, 75, 85, 105, 115) and a first mechanism (5) for connecting the spoke (4, 65, 75, 85, 105, 115) to the rim (1) or to the hub (2), the spoke comprising an elongated body (7, 106, 116), which extends along a longitudinal direction (L), between a first end (8) and a second end (9), the body (7, 106, 116) and the ends (8, 9) comprising fibers (14), the fibers (14) being arranged to form a first loop (15, 68, 86, 107, 117) at the first end (8), **characterized in that** the first connecting mechanism (5) includes a first insert (20, 67, 77, 87, 97, 109, 119) housed in the first loop (15, 68, 86, 107, 117), a first shank (21, 66, 76, 96, 110, 118) affixed to the first insert, the first shank (21, 66, 76, 96, 110, 118) being oriented along the longitudinal direction (L), a first screw (22, 120) or fastening (52) portion being defined on the first shank (21, 66, 76, 96, 110, 118).

2. Wheel according to claim 1, **characterized in that** the first insert (20, 67, 77, 87, 97, 109, 119) extends transversely between a first lateral surface (31) and a second lateral surface (32), the insert having an incurved connecting surface (33) between the lateral surfaces (31, 32).

3. Wheel according to claim 1 or 2, **characterized in that** a plug (35, 111) is housed in the first loop (15, 68, 107, 117).

4. Wheel according to claim 1 or 2, **characterized in that** the insert (87) is housed in the loop (86) so that the loop is entirely filled.

5. Wheel according to one of claims 1 to 4, **characterized in that** a bushing (112) is in contact with and is housed in the loop (15, 68, 86, 107, 117).

6. Wheel according to one of claims 1 to 5, **characterized in that** the first shank (21, 66, 76) has a second screw portion (42) opposite the first (22), the second screw portion (42) being screwed into a threaded opening (43) of the insert (20, 67, 77), the threaded opening (43) being oriented along the longitudinal direction (L).

7. Wheel according to one of claims 1 to 5, **characterized in that** the first shank (96, 118) and the first insert (97, 119) form a unitary one-piece element.

8. Wheel according to one of claims 1 to 7, **characterized in that** the first shank (21, 96, 118) extends through the first loop (15), the fibers (14) of the first loop (15, 86, 107, 117) having been spaced apart to allow the shank (21, 96, 118) to pass through the first loop.

9. Wheel according to one of claims 1 to 7, **characterized in that** the first shank (66) is screwed into the first insert (67) after the spoke (65) has been pierced in the area of the first loop (68).

10. Wheel according to one of claims 1 to 7, **characterized in that** the spoke (75) comprises two distinct arms (78, 79).

11. Wheel according to one of claims 1 to 10, **characterized in that** the first shank (118) has a variable transverse cross-section.

12. Wheel according to claim 11, **characterized in that** the cross-section of the shank (118) is round towards the first screw portion (120), and **in that** the cross-section of the shank (118) is narrower and elongated in the vicinity of the first insert (119).

13. Wheel according to one of claims 1 to 12, **characterized in that** the first screw portion (22, 120) is a threaded portion.

14. Wheel according to one of claims 1 to 12, **characterized in that** the fastening portion (52) comprises an enlarged head (53).

15. Wheel according to one of claims 1 to 14, **characterized in that** the connecting device (3) comprises a second connection mechanism (6) comprising a second insert (50) housed in a second loop (16), a second shank (51) being affixed to the second insert (50), the second shank (51) being oriented along the longitudinal direction (L), a second screw or fastening portion (52) being defined on the second shank.

16. Wheel according to one of claims I to 15, **characterized in that** the shank (21, 51, 66, 76, 96, 110, 118) is substantially aligned with a central longitudinal axis of the spoke (4, 65, 75, 85, 105, 115).

17. Wheel according to one of claims 1 to 16, **characterized in that** the connecting device (3) is transversely symmetrical.

18. Wheel according to one of claims 1 to 17, **characterized in that** the connecting device (3) is symmetrical thickness-wise.

19. Wheel according to one of claims 2 to 18, **characterized in that** the shank (21, 51, 66, 76, 96, 110, 118) is substantially midway between the lateral surfaces (31, 32) of the insert (20, 50, 67, 77, 87, 97, 109, 119).

20. Connecting device (3) for connecting a wheel according to one of claims I to 19.

## Patentansprüche

1. Rad umfassend eine Felge (1), eine Nabe (2), und mindestens eine Verbindungsvorrichtung (3) der Felge (1) mit der Nabe (2), wobei die Verbindungsvorrichtung (3) eine Verbundspeiche (4, 65, 75, 85, 105, 115) und ein erstes Verbindungsmittel (5) der Speiche (4, 65, 75, 85, 105, 115) mit der Felge (1) oder der Nabe (2) umfasst, wobei die Speiche einen langgestreckten Körper (7, 106, 116) umfasst, der sich entlang einer Längsrichtung (L) zwischen einem ersten Ende (8) und einem zweiten Ende (9) erstreckt, wobei der Körper (7, 106, 116) und die Enden (8, 9) Fasern (14) umfassen, wobei die Fasern (14) angeordnet sind, um eine erste Schlaufe (15, 68, 86, 107, 117) am ersten Ende (8) zu bilden, **dadurch gekennzeichnet, dass** das erste Verbindungsmittel (5) ein in der ersten Schlaufe (15, 68, 86, 107, 117) angeordnetes erstes Einsatzstück (20, 67, 77, 87, 97, 109, 119), eine an dem ersten Einsatzstück befestigte erste Stange (21, 66, 76, 96, 110, 118) umfasst, wobei die erste Stange (21, 66, 76, 96, 110, 118) entlang der Längsrichtung (L) ausgerichtet ist, wobei ein erster Verschraubungsteil (22, 120) oder Befestigungsteil (52) auf der ersten Stange (21, 66, 76, 96, 110, 118) definiert ist.

2. Rad gemäß Anspruch 1, **dadurch gekennzeichnet, dass** das erste Einsatzstück (20, 67, 77, 87, 97, 109, 119) sich quer zwischen einer ersten lateralen Seite (31) und einer zweiten lateralen Seite (32) erstreckt, wobei das Einsatzstück eine gekrümmte Verbindungsseite (33) zwischen den lateralen Seiten (31, 32) umfasst.

3. Rad gemäß Anspruch 1 oder 2, **dadurch gekennzeichnet, dass** ein Verschluss (35, 111) in der ersten Schlaufe (15, 68, 107, 117) angeordnet ist.

4. Rad gemäß Anspruch 1 oder 2, **dadurch gekennzeichnet, dass** das Einsatzstück (87) in der Schlaufe (86) so angeordnet ist, dass es sie vollständig ausfüllt.

5. Rad gemäß einem der Ansprüche 1 bis 4, **dadurch gekennzeichnet, dass** eine Hülse (112) in der Schlaufe (15, 68, 86, 107, 117) in Kontakt mit der Schlaufe angeordnet ist.

6. Rad gemäß einem der Ansprüche 1 bis 5, **dadurch gekennzeichnet, dass** die erste Stange (21, 66, 76) einen zweiten Verschraubungsteil (42) umfasst, der dem ersten Verschraubungsteil (22) entgegengesetzt ist, wobei der zweite Verschraubungsteil (42) in einer Schrauböffnung (43) des Einsatzstückes (20, 67, 77) verschraubt wird, wobei die Schrauböffnung (43) entlang der Längsrichtung (L) ausgerichtet ist.

7. Rad gemäß einem der Ansprüche 1 bis 5, **dadurch gekennzeichnet, dass** die erste Stange (96, 118) und das erste Einsatzstück (97, 119) einstückig sind.

8. Rad gemäß einem der Ansprüche 1 bis 7, **dadurch gekennzeichnet, dass** die erste Stange (21, 96, 118) durch die erste Schlaufe (15) durchgeht, wobei die Fasern (14) der ersten Schlaufe (15, 86, 107, 117) beiseite geschoben wurden, um die Stange (21, 96, 118) durchzulassen.

9. Rad gemäß einem der Ansprüche 1 bis 7, **dadurch gekennzeichnet, dass** die erste Stange (66) in dem ersten Einsatzstück (67) verschraubt wird, nachdem die Speiche (65) im Bereich der ersten Schlaufe (68) durchbohrt wurde.

10. Rad gemäß einem der Ansprüche 1 bis 7, **dadurch gekennzeichnet, dass** die Speiche (75) zwei unterschiedliche Zweige (78, 79) umfasst.

11. Rad gemäß einem der Ansprüche 1 bis 10, **dadurch gekennzeichnet, dass** die erste Stange (118) einen variablen Abschnitt umfasst.

12. Rad gemäß Anspruch 11, **dadurch gekennzeichnet, dass** der Stangenabschnitt (118) auf der Seite des ersten Verschraubungsteils (120) rund ist und der Stangenabschnitt (118) in der Nähe des ersten Einsatzstückes (119) dünner und langgestreckter ist.

13. Rad gemäß einem der Ansprüche 1 bis 12, **dadurch gekennzeichnet, dass** der erste Verschraubungsteil (22, 120) in der Form eines Gewindes realisiert wird.

14. Rad gemäß einem der Ansprüche 1 bis 12, **dadurch gekennzeichnet, dass** der Befestigungsteil (52) einen erweiterten Kopf (53) umfasst.

15. Rad gemäß einem der Ansprüche 1 bis 14, **dadurch gekennzeichnet, dass** die Verbindungsvorrichtung (3) ein zweites Verbindungsmittel (6) umfasst, welches ein zweites Einsatzstück (50) umfasst, das in einer zweiten Schlaufe (16) angeordnet ist, wobei eine zweite Stange (51) an dem zweiten Einsatzstück (50) befestigt ist, wobei die zweite Stange (51) entlang der Längsrichtung (L) ausgerichtet ist, wobei ein zweiter Verschraubungsteil oder Befestigungsteil (52) auf der zweiten Stange definiert ist.

16. Rad gemäß einem der Ansprüche 1 bis 15, **dadurch gekennzeichnet, dass** die Stange (21, 51, 66, 76, 96, 110, 118) zu einer zentralen Längsachse der Speiche (4, 65, 75, 85, 105, 115) im Wesentlichen axial ausgerichtet ist.

17. Rad gemäß einem der Ansprüche 1 bis 16, **dadurch gekennzeichnet, dass** die Verbindungsvorrichtung (3) in der Querrichtung symmetrisch ist.

18. Rad gemäß einem der Ansprüche 1 bis 17, **dadurch gekennzeichnet, dass** die Verbindungsvorrichtung (3) über ihre Dicke symmetrisch ist.

19. Rad gemäß einem der Ansprüche 2 bis 18, **dadurch gekennzeichnet, dass** die Stange (21, 51, 66, 76, 96, 110, 118) im Wesentlich auf halbem Weg zwischen den lateralen Seiten (31, 32) des Einsatzstückes (20, 50, 67, 77, 87, 97, 109, 119) ist.

20. Verbindungsvorrichtung (3) für ein Rad gemäß einem der Ansprüche 1 bis 19.
